(19) Europäisches Patentamt
European Patent Office
Office européen des brevets

(11)    **EP 2 467 286 B1**

(12)    **EUROPÄISCHE PATENTSCHRIFT**

(45) Veröffentlichungstag und Bekanntmachung des Hinweises auf die Patenterteilung:
**01.05.2013   Patentblatt 2013/18**

(21) Anmeldenummer: **10739909.9**

(22) Anmeldetag: **02.08.2010**

(51) Int Cl.:
**B60T 11/224** (2006.01)      **B60T 13/68** (2006.01)

(86) Internationale Anmeldenummer:
**PCT/EP2010/061178**

(87) Internationale Veröffentlichungsnummer:
**WO 2011/020691 (24.02.2011 Gazette 2011/08)**

(54) **HAUPTBREMSZYLINDER UND VERFAHREN ZUM BETREIBEN EINES HAUPTBREMSZYLINDERS**

MASTER BRAKE CYLINDER AND METHOD FOR OPERATING A MASTER BRAKE CYLINDER

MAÎTRE-CYLINDRE DE FREIN ET PROCÉDÉ POUR FAIRE FONCTIONNER UN MAÎTRE-CYLINDRE DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **21.08.2009   DE 102009028811**

(43) Veröffentlichungstag der Anmeldung:
**27.06.2012   Patentblatt 2012/26**

(73) Patentinhaber: **Robert Bosch GmbH**
**70442 Stuttgart (DE)**

(72) Erfinder: **MAHNKOPF, Dirk**
**Eglosheim**
**71634 (DE)**

(56) Entgegenhaltungen:
**EP-A2- 1 078 833       DE-A1- 3 717 546**
**DE-A1- 10 164 319       GB-A- 2 084 676**

EP 2 467 286 B1

**Beschreibung**

**Stand der Technik**

In einem hydraulischen Bremssystem eines Kraftfahrzeugs wird meist ein Bremspedal durch den Fahrer betätigt und verschiebt, gegebenenfalls mit Unterstützung eines Bremskraftverstärkers, mechanisch einen Kolben in einem Hauptbremszylinder, an dessen Ausgängen ein Hydraulikaggregat angeschlossen ist. Dadurch wird Bremsflüssigkeit in das Hydraulikaggregat (z.B. ESP oder ABS) eingebracht und zu den Radbremszylindern geleitet. Dort erhöht das eingebrachte Volumen den Bremsdruck und führt durch Anpressen der Bremsbeläge an die Bremsscheiben zu einer Bremswirkung.

In Fahrzeugen bei denen ein Elektromotor zum Antreiben des Kraftfahrzeugs vorgesehen ist kann der Elektromotor in Fahrsituationen in denen der Elektromotor nicht als Antrieb genutzt wird als Generator genutzt werden, um beispielsweise eine Batterie zu laden. Das Betreiben des Elektromotors als Generator führt zu einer Bremswirkung, bei der Bewegungsenergie des Fahrzeugs in elektrische Energie umgewandelt wird, man spricht von rekuperativem Bremsen. Die bei einer Bremsung gewonnene Energie kann zu einem späteren Zeitpunkt wieder anderweitig verwendet werden, so zum Beispiel zum Antreiben des Fahrzeugs.

Das vom Generator zur Bremsung beigetragene Generatormoment ist in der Regel abhängig von der Fahrgeschwindigkeit des Kraftfahrzeugs und verändert sich somit während der Bremsung oder die vom Generator erzeugte Bremswirkung ist nicht ausreichend. Zum Ausgleich dieses sich ändernden Generatormoments oder auch zu dessen Ergänzung kann ein rekuperatives Bremssystem mit einem hydraulischen Bremssystem zu einer Gesamt-Bremsanlage kombiniert werden.

Ist vom Fahrer, beispielsweise durch eine Bremspedalbetätigung ein gewolltes Gesamtbremsmoment vorgegeben, so kann durch das hydraulische Bremssystem die Differenz zwischen Gesamtbremsmoment und Generatormoment aufgebracht werden, so zum Beispiel durch eine Druckerhöhung im hydraulischen Bremssystem wenn das Generatormoment im Vergleich zu dem vom Fahrer gewollten Gesamtbremsmoment zu klein ist. Eine Druckänderung, beispielsweise durch Änderung der Wirkung des Bremskraftverstärkers im hydraulischen Bremssystem führt in herkömmlichen Bremssystemen meist zu einer Änderung des Betätigungswegs des Bremspedals, was für den Fahrer irritierend ist.

Häufig wird deshalb das Bremspedal an einen Pedalwegsimulator zur Generierung eines Pedalgefühls für den Fahrer angeschlossen und das Bremspedal ist vollständig vom Bremssystem entkoppelt, der Druckaufbau im hydraulischen Bremssystem entsteht rein durch Fremdkraft, z.B. aus einem Speicher. Dies birgt jedoch das Risiko, bei Ausfall der Fremdkraft keine mechanische Kopplung, zwischen Bremspedal und Radbremse mehr, oder erst eine mechanische Kopplung nach überwinden eines Leerwegs des Bremspedals zu haben und somit keine Möglichkeit einer Notbetätigung durch den Fahrer alleine oder ohne eine auffällige, irritierende Rückwirkung für den Fahrer.

In der DE 101 64 319 A1 wird eine Betätigungseinheit für eine hydraulische Fahrzeugbremsanlage mit zwei Kolben-Zylinder-Anordnungen mit unterschiedlichen Querschnittsflächen beschrieben.

In der WO 2004/101308 wird ein Verfahren beschrieben, wie Druckverhältnisse in einem hydraulischen Bremssystem geändert werden können um das hydraulische Bremssystem mit einem regenerativen Bremssystem zusammen zu betreiben und dabei einen hohen Bremskomfort zu erreichen. Dazu wird in dieser Schrift Volumen an Bremsmittel in einen Niederdruckspeicher abgelassen. Aus diesem Niederdruckspeicher kann es durch Betätigen einer Pumpe wieder dem hydraulischen Bremskreis zugeführt werden.

**Offenbarung der Erfindung**

Kern der Erfindung ist es, einen erfindungsgemäßen Hauptbremszylinder mit den Merkmalen des Anspruchs 1 für das hydraulische Bremssystem vorzusehen, und diesen durch das erfindungsgemäße Verfahren derart zu betreiben, dass eine Pedalwegsänderung eines Bremspedals auf Grund einer Änderung des Anteils des hydraulischen Bremssystems an der Gesamtbremswirkung entgegengewirkt wird und so eine irritierende Rückwirkung auf das Bremspedal vermieden wird.

Zu diesem Zweck besteht der Hauptbremszylinder aus einer erste Kolben-Zylinder-Anordnung umfassend einen ersten Zylinder und wenigstens zwei Kolben mit einer ersten Querschnittsfläche sowie eine zweite Kolben-Zylinder-Anordnung umfassend einen zweiten Zylinder und wenigstens zwei Kolben mit einer zweiten Querschnittsfläche, wobei die erste Querschnittsfläche ungleich der zweiten Querschnittsfläche ist. Der erste Zylinder bildet mit den ersten Kolben eine zusätzliche Kammer im Vergleich zu einem konventionellen Hauptbremszylinder. Diese Kammer wird als Ausgleichskammer genutzt.

Vorteilhafterweise ist der Hauptbremszylinder mittels einer ersten hydraulischen Verbindung ausgehend von der Ausgleichskammer mit einer Volumenaufnahmeeinheit verbunden und ausgehend von dem zweiten Zylinder mit weiteren hydraulischen Verbindungen, welche zu jeweils angeschlossenen Bremskreisen führen. Des Weiteren ist wenigstens eine zweite hydraulische Verbindung vorgesehen, die die erste hydraulische Verbindung mit wenigstens einer der weiteren hydraulischen Verbindungen und somit mit wenigstens einem Bremskreis verbindet.

In vorteilhafter Ausgestaltung steht der Hauptbremszylinder über die erste Kolben-Zylinder-Anordnung, also über die Ausgleichskammer, mit einer Volumenaufnahmeeinheit sowie mit dem hydraulischen Bremssystem jeweils unterbrechbar in hydraulischer Verbindung. Zum Zweck der Unterbrechung der hydraulischen Verbindung sind jeweils steuerbare Unterbrechungsmittel vorgesehen, durch deren Ansteuerung die hydraulischen Verbindungen unterbrochen werden können.

Das erfindungsgemäße **Verfahren** zum Betreiben eines Hauptbremszylinders kommt in einer Gesamt-Bremsanlage zur Anwendung, wobei die Gesamt-Bremsanlage das hydraulische Bremssystem sowie neben dem hydraulischen Bremssystem ein weiteres Bremssystem umfasst.

Der Hauptbremszylinder nimmt in die erste Kolben-Zylinder-Anordnung Volumen an Bremsflüssigkeit auf oder gibt Volumen an Bremsflüssigkeit aus dieser ab. Insbesondere gibt der Hauptbremszylinder Volumen an Bremsflüssigkeit aus der zweiten Kolben-Zylinder-Anordnung ab. Die Volumenaufnahme oder Volumenabgabe geschieht in Abhängigkeit von einem Betriebszustand des weiteren Bremssystems.

Das erfindungsgemäße Verfahren sieht vor, dass das hydraulische Bremssystem einen die vom Fahrer eingebrachte Betätigungskraft um eine Unterstützungskraft verstärkenden steuerbaren Bremskraftverstärker aufweist, wobei die Gesamt-Bremsanlage ein Betätigungselement aufweist, welches eine Eingansstange zur Aufnahme der Fahrerkraft umfasst. Des Weiteren wird der Bremskraftverstärker derart betrieben, dass bei einer durch das weitere Bremssystem bedingten Bremsmomentzunahme der Bremskraftverstärker in seiner Wirkung derart reduziert wird, und/oder bei einer durch das weitere Bremssystem bedingten Bremsmomentabnahme der Bremskraftverstärker in seiner Wirkung derart erhöht wird, dass das durch die Gesamt-Bremsanlage aufgebrachte Gesamtbremsmoment im Wesentlichen konstant ist. Außerdem ist vorgesehen, dass der Hauptbremszylinder, durch Volumenaufnahme und/oder Volumenabgabe aus der und/oder in die wenigstens eine der weiteren hydraulischen Verbindungen oder aus der und/oder in die Volumenaufnahmeeinheit, einer Änderung der Position des Betätigungselements und/oder der Eingangsstange entgegenwirkt, wobei diese Änderung der Position des Betätigungselements und/oder der Eingangsstange durch Änderung der durch den Bremskraftverstärker aufgebrachten Unterstützungskraft und der daraus folgenden Änderung der Volumenaufnahme des Bremssystems hervorgerufen wurde. Insbesondere wird diese Änderung der Position des Betätigungselements und/oder der Eingangsstange ganz oder zumindest teilweise kompensiert. Dadurch bemerkt ein Fahrer keinen oder nur einen geringen Versatz des Betätigungselements und bemerkt eine Änderung der Unterstützungskraft nur geringfügig oder gar nicht.

Das hydraulische Bremssystem ist Teil einer Gesamt-Bremsanlage , die neben dem hydraulischen Bremssystem ein weiteres Bremssystem aufweist. In einer ersten Ausführungsform des Verfahrens wird in Abhängigkeit des Betriebszustandes des weiteren Bremssystems durch Herstellen wenigstens einer der ersten und zweiten hydraulischen Verbindungen Volumen an Bremsflüssigkeit aus der ersten Kolben-Zylinder-Anordnung in die Volumenaufnahmeeinheit, insbesondere selbsttätig, eingebracht oder aus wenigstens einer der weiteren hydraulischen Verbindungen in die erste Kolben-Zylinder-Anordnung insbesondere selbsttätig aufgenommen. So kann Volumen an Bremsflüssigkeit zwischen einer Volumenaufnahmeeinheit, der Ausgleichskammer in der ersten Kolben-Zylinder-Einheit sowie dem hydraulischen Bremskreis ausgetauscht werden.

Im erfindungsgemäßen Verfahren wird der Betriebszustand des weiteren Bremssystems durch eine Änderung des Beitrags zur Gesamtbremswirkung durch das weitere Bremssystem repräsentiert.

In der ersten Ausführungsform des Verfahrens und für den Fall, dass die erste Querschnittsfläche **größer** als die zweite Querschnittsfläche ist, geschieht eine Aufnahme von Volumen in die Ausgleichskammer des Hauptbremszylinders aus wenigstens einer der weiteren hydraulischen Verbindungen wenn der Beitrag des weiteren Bremssystems erhöht wird und eine Abgabe von Volumen aus der Ausgleichskammer in die Volumenaufnahmeeinheit wenn der Beitrag des weiteren Bremssystems reduziert wird.

Ist dagegen die erste Querschnittsfläche **kleiner** als die zweite Querschnittsfläche so erfolgt eine Abgabe von Volumen aus der Ausgleichskammer in den angeschlossenen Bremskreis oder in die zweite Kolben-Zylinder-Anordnung wenn der Beitrag des zusätzlichen Bremssystems steigt.

Wird dagegen der Beitrag des weiteren Bremssystems reduziert so erfolgt eine Abgabe von Volumen aus der zweiten Kolben-Zylinder-Anordnung oder dem angeschlossenen Bremskreis in die Volumenaufnahmeeinheit.

In einer alternativen Ausführungsform wird durch Herstellen einer der hydraulischen Verbindungen zu der Volumenaufnahmeeinheit oder dem hydraulischen Bremssystem Volumen an Bremsflüssigkeit abhängig vom Betriebszustand des weiteren Bremssystems entweder aus der Volumenaufnahmeeinheit oder aus dem hydraulischen Bremssystem in die erste Kolben-Zylinder-Anordnung, insbesondere selbsttätig, eingebracht.

In der alternativen Ausführungsform des Verfahrens und für den Fall, dass die erste Querschnittsfläche **größer** als die zweite Querschnittsfläche ist, ist vorgesehen dass eine Aufnahme von Volumen in die Ausgleichskammer aus der Volumenaufnahmeeinheit dann geschieht, wenn der Beitrag des weiteren Bremssystems verringert wird und eine Aufnahme von Volumen in die Ausgleichskammer aus dem hydraulischen Bremssystem dann geschieht, wenn der Beitrag des weiteren Bremssystems erhöht wird.

Ist dagegen die erste Querschnittsfläche **kleiner** als die zweite Querschnittsfläche so erfolgt nun eine Abgabe von Volumen aus der Ausgleichskammer in den angeschlossenen Bremskreis oder in die zweite Kolben-Zylinder-Anordnung, wenn der Beitrag des weiteren Bremssystems erhöht wird und/oder eine Aufnahme von Volumen in den die Ausgleichskammer aus der Volumenaufnahmeeinheit (401), wenn der Beitrag des weiteren Bremssystems reduziert wird.

Für die genannten Ausführungsformen wird eine Aufnahme und/oder Abgabe von Volumen an Bremsflüssigkeit durch die Ausgleichskammer durch Steuern der ersten und/oder zweiten Unterbrechungsmittel gesteuert. Somit kann durch Steuern der Unterbrechungsmittel ausgewählt werden ob die Ausgleichskammer hydraulisch mit dem hydraulischen Bremskreis und der zweiten Kolben-Zylinder-Anordnung oder mit der Volumenaufnahmeeinheit verbunden ist und Volumen von dort aufnimmt, oder gegebenenfalls dorthin abgibt.

In vorteilhafter Ausgestaltung des Verfahrens ist die Volumenaufnahmeeinheit eine Kolben-Zylinder-Einheit, die in ein Betätigungselement für die Gesamt-Bremsanlage integriert ist, im folgenden als Eingangskammer bezeichnet.

In der alternativen Ausführungsform des Verfahrens ist die Volumenaufnahmeeinheit eine Hydraulikspeichereinheit, welche wenigstens einen Kolben **(403),** wenigstens einen Zylinder **(402)** sowie wenigstens ein elastisches Element **(404),** insbesondere eine Feder umfasst, die Volumen unter erhöhtem Druck Speichern kann.

In dem erfindungsgemäßen Verfahren ist vorgesehen, dass die Hydraulikspeichereinheit durch Betätigen des steuerbaren Bremskraftverstärkers vorgeladen werden kann. Auf diese Weise wird das Druckniveau in der Hydraulikspeichereinheit angehoben, und somit auch das Druckniveau unter dem die Ausgleichskammer Volumen an Bremsflüssigkeit selbsttätig aufnehmen kann.

Da das erfindungsgemäße Verfahren beinhaltet, dass der Volumentransport durch Steuern der steuerbaren Unterbrechungsmittel, insbesondere selbsttätig, geschieht müssen die Querschnittsflächen der ersten und zweiten Kolben-Zylinder-Anordnung und der Eingangskammer sowie der vorhandene Druck in der Hydraulikspeichereinheit in Bezug auf den im angeschlossenen Bremskreis oder in der Ausgleichskammer vorhandenen Druck so dimensioniert sind, dass ein Aufnehmen und/oder Abgeben, insbesondere selbsttätiges Aufnehmen und/oder Abgeben von Volumen an Bremsflüssigkeit in den und/oder aus der Ausgleichskammer, oder insbesondere eine Abgabe von Volumen aus der zweiten Kolben-Zylinder-Anordnung, innerhalb konstruktionsbedingter Grenzen möglich ist.

Die Betrag der Änderung der Position des Betätigungselements und/oder der Eingangsstange, welche durch erfindungsgemäßes Betreiben des Hauptbremszylinders hervorgerufen wird hängt von den Querschnittsflächen der ersten Kolben-Zylinder-Einheit, der zweiten Kolben-Zylinder-Einheit sowie der Volumenaufnahmeeinheit ab. Außerdem lässt sich der Betrag der Kompensation der Änderung der Position des Betätigungselements und/oder der Eingangsstange durch Steuern der jeweiligen Unterbrechungsmittel innerhalb konstruktionsbedingter Grenzen gesteuert werden, so zum Beispiel anhand der Öffnungsdauer der Unterbrechungsmittel.

## Beschreibung der Zeichnungen

**Figur 1:** Hauptbremszylinder mit Ausgleichskammer, die eine Querschnittsfläche aufweist welche größer ist als die Querschnittsfläche der zweiten Kolben-Zylinder-Anordnung in Verbindung mit einer in das Pedal integrierten Eingangskammer.

**Figur 2:** Verfahren zum Betreiben eines Hauptbremszylinders mit Ausgleichskammer bei Einblenden eines Generatormoments.

**Figur 3:** Verfahren zum Betreiben eines Hauptbremszylinders mit Ausgleichskammer bei Ausblenden eines Generatormoments.

**Figur 4:** Hauptbremszylinder mit Ausgleichskammer die eine Querschnittsfläche aufweist welche größer ist als die Querschnittsfläche der zweiten Kolben-Zylinder-Anordnung in Verbindung mit einem Hydraulkspeicher.

**Figur 5:** Alternative Ausführungsform des Hauptzylinders mit einer Ausgleichskammer, die eine Querschnittsfläche aufweist welche kleiner ist als die Querschnittsfläche der zweiten Kolben-Zylinder-Anordnung.

## Ausführungsformen der Erfindung

In einer bevorzugten **Ausführungsform** wird von einer Gesamt-Bremsanlage ausgegangen, welches aus einem konventionellen, hydraulischen Teil (beinhaltend z.B. ESP, ABS-Komponenten) und einem zusätzlichen Teil besteht. Zu Beispielszwecken wird angenommen dass der Beitrag des zusätzlichen Teils zur Bremswirkung der Gesamt-Bremsanlage von einem rekuperativen Bremssystem herrührt und durch ein Generatormoment hervorgebracht wird. Der herkömmliche Teil des Bremssystems besteht aus einer Betätigungsvorrichtung **114** über die eine Fahrerkraft **102** in das Bremssystem eingebracht werden kann. Diese Fahrerkraft kann mit einer Unterstützungskraft **101,** z.B. ausgehend von einem steuerbaren Bremskraftverstärker, an einem Koppelelement **115** kombiniert werden, beispielsweise an einer Reaktionsscheibe. Der steuerbare Bremskraftverstärker kann sowohl ein elektromechanischer als auch ein steuerbarer Vakuumbremskraftverstärker mit elektrisch geschalteten Ventilen sein, allerdings sind auch weitere Ausführungsformen denkbar.

In konventionellen hydraulischen Bremssystemen überträgt das Kopplungselement **115** die Summe aus Fahrerkraft **102** und Unterstützungskraft **101**, gegebenenfalls über eine Kolbenstange auf einen Eingangskolben eines Hauptbremszylinders. Durch die daraus resultierende Verschiebung des Eingangskolbens sowie gegebenenfalls eines zweiten Kolbens wird Volumen an Bremsflüssigkeit in angeschlossene Bremskreise verschoben und führt bei an den Bremskreis angeschlossenen Radbremszylindern zu einem Druckaufbau und letztlich zu einer Bremswirkung durch die Radbremsen. Unter Umständen kann eine Ventilanordnung gemäß eines ESP/ABS Rückfördersystems zwischen Radbremsen und Hauptbremszylinder zur Bremsdruckregelung zwischengeschaltet sein.

Kern der Erfindung ist nun, die Bremswirkung eines rekuperativen Bremssystems hervorgebracht durch ein Generatormoment mit einer Bremswirkung des hydraulischen Bremssystems, hervorgebracht durch Fahrerkraft **102** und Unterstützungskraft **101,** zu einer Gesamtbremswirkung zu kombinieren. Ändert sich der Beitrag zur Gesamtbremswirkung des rekuperativen Systems, so kann durch Betätigen des steuerbaren Bremskraftverstärkers eine Druckanpassung vorgenommen werden und somit die Bremswirkung des hydraulischen Bremssystems angepasst werden. Nimmt die Bremswirkung des rekuperativen Systems ab, so wird die Unterstützungskraft **101** des steuerbaren Bremskraftverstärkers erhöht, nimmt die Bremswirkung des rekuperativen Systems zu, so wird die Unterstützungskraft **101** des Bremskraftverstärkers verringert. Da durch eine Änderung der Druckverhältnisse im hydraulischen Bremssystem durch den Bremskraftverstärker Volumen an Bremsflüssigkeit in den Hauptbremszylinder zurückfließen kann, oder aus diesem verschoben wird, ändert sich somit auch die Position der Betätigungsvorrichtung **114,** quasi eine Rückwirkung des hydraulischen Bremssystems. Die Gesamtbremswirkung aus rekuperativem System und hydraulischen System bleibt dagegen konstant. Um eine für den Fahrer gewohnte Pedalposition wiederherzustellen, oder einer Veränderung der Pedalposition zumindest teilweise entgegenzuwirken wird als erfindungsgemäße Vorrichtung ein Hauptbremszylinder bestehend aus zwei Kolben-Zylinder-Anordnungen genutzt.

Eine erste Kolben- Zylinder-Anordnung umfasst einen Zylinder **105** sowie zwei Kolben **106**a und **106b,** wobei der Kolben **106b** in mechanischer Verbindung mit dem Kopplungselement **115** steht und über dieses mit der Fahrerkraft **102** sowie der Unterstützungskraft **101** beaufschlagt werden kann. Der Zylinder **105** weist eine erste Querschnittsfläche **A1** auf und steht in baulicher Verbindung mit einer weiteren, zweiten Kolben-Zylinder-Anordnung. Die zweite Kolben Zylinder-Anordnung umfasst zwei Kolben **108**a und **108**b, wobei der Kolben **108b** in starrer mechanischer Verbindung mit Kolben **106**a steht. Die Kolben **108**a,b werden von einem Zylinder 107 umfasst. Der Zylinder **107** hat eine geringere Querschnittsfläche **A2** als der Zylinder **105.**

Die zwei Kolben **108a**, **108b** sowie der Zylinder **107** sind im wesentlichen als Tandem-Hauptbremszylinder bekannt, wie er in konventionellen hydraulischen Bremssystemen zum Betreiben zweier hydraulischer Bremskreise vorgesehen ist.

Auch in der erfindungsgemäßen Vorrichtung sind an die zwei Kammern, welche durch den Zylinder **107** sowie jeweils durch die Kolben **108**a und **108b** gebildet werden Hydraulikleitungen **111**a und **111**b angeschlossen. Diese Hydraulikleitungen führen zu hydraulischen Bremskreisen, und gegebenenfalls mit einem zwischengeschaltetem Hydraulikaggregat eines ESP/ABS Rückfördersystems zu wenigstens einer an den Bremskreis angeschlossenen Radbremse.

Der Zylinder **105** bildet mit den Kolben **106**a und **106b** ebenfalls eine Kammer, welche im folgenden als Ausgleichskammer **120** bezeichnet wird. An die Ausgleichskammer **120** angeschlossen ist eine hydraulische Leitung, welche in zwei weitere hydraulische Leitungen **109** und **110** verzweigt. Über Leitung **110** steht die Ausgleichkammer **120** in hydraulischer Verbindung zur hydraulischen Leitung **111b** und somit zu dem wenigstens einen angeschlossenen Bremskreis, sowie zu der dem Zylinder **105** zugewandten Kammer der zweiten Kolben-Zylinder-Anordnung. Die Hydraulikleitung **110** ist durch ein steuerbares Ventil **113** unterbrechbar.

Die weitere Hydraulikleitung **109,** welche ebenso durch ein Ventil **112** hinter der Verzweigung unterbrochen werden kann, steht in hydraulischer Verbindung mit einer dritten Kolben-Zylinder- Anordnung **104.** Diese umfasst einen Zylinder **116** und einen Kolben **117.** Der Kolben **117** kann über eine Eingangstange **118** mit der Fahrerkraft **102** beaufschlagt werden sowie Kräfte auf die Eingangsstange **118** übertragen. Die von Zylinder **116** und Kolben **117** gebildete Kammer wird im folgenden als Eingangskammer **119** bezeichnet. Die Eingangskammer **119** hat die Querschnittsfläche **A3.** Die dritte Kolben-Zylinder Anordnung ist baulich in die Betätigungsvorrichtung **114** integriert. Die steuerbaren Ventile **112, 113,** sowie das weiter unten noch zu definierende steuerbare Ventil **405** werden von einem Steuergerät angesteuert, dieses ist jedoch nicht eingezeichnet. Vorteilhafterweise ist es das Steuergerät des Bremskraftverstärkers, welches die Steuerung der Ventile zusätzlich übernimmt.

Das erfindungsgemäße Verfahren wird anhand zweier typischer Betriebssituationen der Gesamt-Bremsanlage beschrieben.

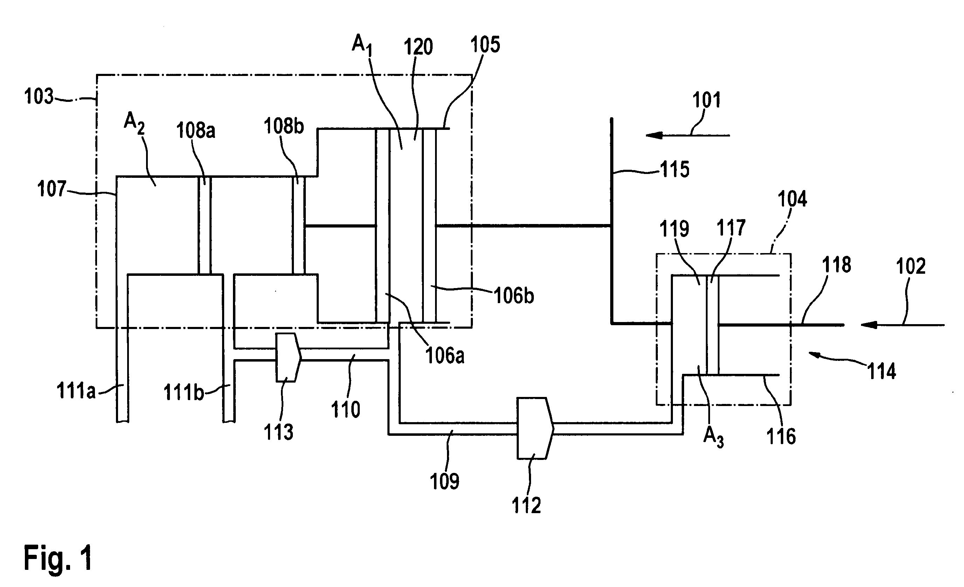

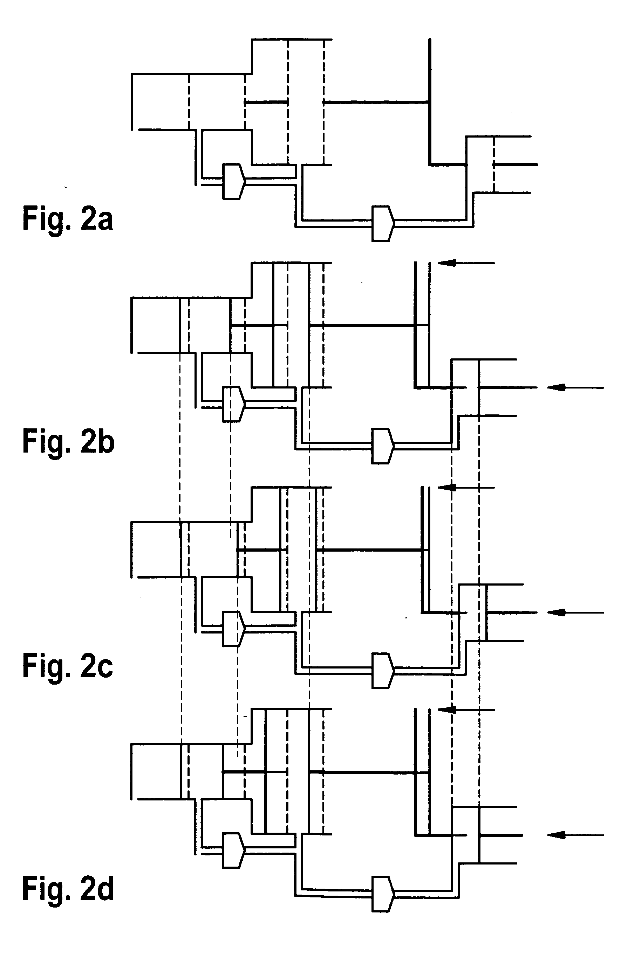

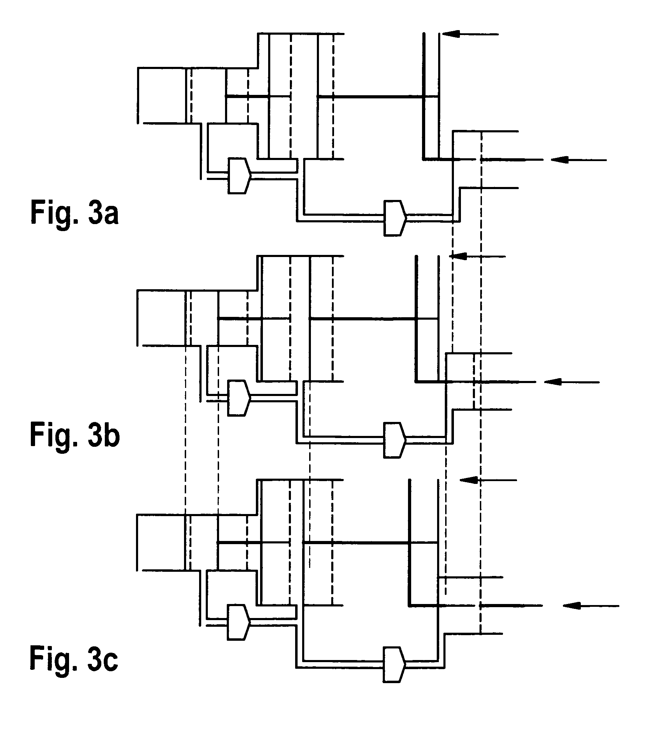

In einer ersten Betriebssituation bremst der Fahrer nur mit dem hydraulischen Bremssystem, dann wird ein Generatormoment des rekuperativen Bremssystems hinzugeschaltet oder nimmt zu. Diese Betriebssituation ist in Figur **2** dargestellt. Da in Figur **1** alle Bezugszeichen bereits eingeführt wurden, sind diese in Figur **2** und **3** nicht erneut

eingezeichnet.

In Figur 2a befindet sich der Hauptbremszylinder **103** in unbetätigtem Zustand, es liegt weder eine Fahrerkraft **102** noch eine Unterstützungskraft **101** am Kopplungselement **115** an.

In Figur 2b ist eine Situation dargestellt, in der der Fahrer mit dem hydraulischen Bremssystem alleine bremst. Das Kopplungselement wird mit einer Fahrerkraft **102** und mit einer Unterstützungskraft **101** beaufschlagt. Die mechanische Verbindung des Kopplungselements **115** mit dem Kolben **106**b der ersten Kolben-Zylinder-Anordnung überträgt die Kraft auf den Kolben **106**b. Dadurch wird der Kolben **106**b im Zylinder **105** in Richtung der zweiten Kolben-Zylinder-Anordnung verschoben, und mit diesem ein Volumen an Bremsflüssigkeit sowie der Kolben **106**a.

Hierbei sind die regelbaren Ventile **112** und **113** beide geschlossen.

Durch die mechanische Verbindung von Kolben **106**a und Kolben **108**b wird Kolben **108**b sowie ein Volumen an Bremsflüssigkeit im Zylinder **107** verschoben. Daraus resultiert eine Verschiebung von Kolben **108**a sowie eine weitere Verschiebung von Bremsflüssigkeit. Die erwähnte Verschiebung an Bremsflüssigkeit gelangt über die Hydraulikleitungen **111**a und **111**b in die an den Hauptbremszylinder **103** angeschlossenen Bremskreise und führt dort zu einem Druckaufbau in den Radbremszylindern und somit zu einer Bremswirkung.

In Figur 2c wird eine Bremswirkung hinzugeschaltet, welche durch Antreiben eines Generators erzeugt wird. Um eine konstante Verzögerung entsprechend der Position des Betätigungselements **114** zu gewährleisten wird der Betrag der Unterstützungskraft **101** durch den steuerbaren Bremskraftverstärker reduziert. Diese Reduktion der Unterstützungskraft **101** führt dazu, dass Bremsflüssigkeit in den Hauptbremszylinder zurückfließt und dass die Kolben **106**a, b und **108**a,b entgegen ihrer Betätigungsrichtung verschoben werden und somit auch das Betätigungselement **114**.

Dieser für den Fahrer irritierenden Rückwirkung durch Verschieben des Betätigungselements kann erfindungsgemäß durch Regeln des Ventils **113** entgegengewirkt werden.

Dazu wird in Figur 2d das Ventil **113** geöffnet und es fließt Volumen an Bremsflüssigkeit aus dem Bremskreis über Hydraulikleitung **111**b und **110** zurück in die Ausgleichskammer **120**. Dieser Fluss an Bremsflüssigkeit resultiert aus den unterschiedlichen Druckniveaus in Bremskreis und der zweiten Kolben-Zylinder-Anordnung sowie in der Ausgleichskammer **120**. Das Ventil **112** wird dabei geschlossen gehalten.

Für einen typischen Hauptbremszylinder beträgt der Durchmesser der Querschnittsfläche *A2 22,56 mm,* was bei einer Eingangskraft von angenommenen *200N* zu einem Druck von etwa *5 bar* führt.

Wird zum Beispiel eine Fahrerkraft **102** von *100N* um eine Unterstützungskraft **101** von *500N* durch den Bremskraftverstärker ergänzt, so führt die resultierende Kraft von *600N* zu einem Druck von *15bar* in der zweiten Kolben-Zylinder-Anordnung, wenn diese eine Querschnittsfläche *A2* mit einem Durchmesser von *22,54mm* aufweist. Angenommen die Querschnittsfläche A1 der Ausgleichskammer **120** sei halb so groß wie die Querschnittsfläche A1 der zweiten Kolben-Zylinder-Anordnung, so herrscht in der Ausgleichskammer ein Druck von *7,5bar.* Wird also das Ventil **113** geöffnet so kann Volumen an Bremsflüssigkeit auf Grund des Druckunterschiedes aus dem ersten Bremskreis in die Ausgleichskammer fließen.

Wenn Volumen aus dem Bremskreis in die Ausgleichskammer fließt, bewegt sich der Kolben 108b in Figur 2c um eine Strecke -ds nach links, der mit Kolben 108b starr verbundenen Kolben 106a gefolgt von 106b somit ebenso. Das in die Ausgleichskammer aufgenommene Volumen führt aber zu einer Abstandsänderung der Kolben 106a und 106b um eine Strecke ds/2. Somit bewegt sich der Kolben 106b um -ds+ds/2=-ds/2 in Figur 2c nach links.

Dieser Relativbewegung soll nun die Verschiebung der Kolben 108b, 106a und 106b kompensieren, die aus dem Zurückfließen von Bremsflüssigkeit aus dem Bremskreis aufgrund des Absenkens der Unterstützungskraft resultiert. Stellt man das Volumen an Bremsflüssigkeit nun so ein, dass der Weg ds/2 genau der vorausgegangenen Verschiebung der Kolben 108b, 106a und 106b entspricht, so bewegt sich die Betätigungsvorrichtung 114 in der Summe nicht mehr.

Der Betrag des so kompensierten Weges der Betätigungsvorrichtung lässt sich anhand des Verhältnisses der Querschnittsflächen sowie durch Steuern oder Regeln des Ventils 113 einstellen.

In einer zweiten Betriebssituation bremst der Fahrer mit einer Kombination aus hydraulischem Bremssystem sowie rekuperativem Bremssystem wobei ein Generatormoment des rekuperativen Bremssystems nun abgeschaltet wird oder abnimmt. Die zweite Betriebssituation ist in Figur 3 dargestellt.

Figur 3a entspricht dem Zustand in Figur 2d, der Fahrer bremst mit einer Kombination aus beiden beteiligten Bremssystemen.

Um nun den Beitrag zur Bremswirkung durch das wegfallende oder abnehmende Generatormoment zu kompensieren wird, wie in Figur 3b gezeigt, die Unterstützungskraft **101** des Bremskraftverstärkers erhöht und durch Verschieben der Kolben **106**a,b und **108**a,b Volumen an Bremsflüssigkeit in die angeschlossenen Bremskreise verschoben, wo die resultierende Druckerhöhung in den angeschlossenen Radbremszylindern zu einer Erhöhung der Bremswirkung des hydraulischen Bremssystems führt. Dadurch wird das Betätigungselement **114** ebenfalls in Betätigungsrichtung versetzt.

Um diese Pedalverschiebung zu kompensieren wird nun das Ventil **112** geöffnet und es gelangt Volumen an Bremsflüssigkeit aus der Ausgleichskammer **120** über die Hydraulikleitung **109** in die Eingangskammer **119**. Obwohl sich der dem Betätigungselement **114** zugewandte Kolben **106**b der Ausgleichskammer **120** nach links bewegt, bewegt sich, auf Grund der Volumenaufnahme durch die Eingangskammer die Eingangstange **118,** und somit das Pedal entgegengesetzt der Betätigungsrichtung zur Bremskraftverstärkung.

Auch hier spielen die unterschiedlichen Druckniveaus eine entscheidende Rolle. Der Druck in der zweiten Kolben-Zylinder-Anordnung sowie im Bremssystem sei $p_2$ und ergibt sich aus der Fahrerkraft 102 $F_{FAHRER}$ und der Querschnittsfläche $A_2$ der zweiten Kolben-Zylinder-Anordnung 107, 108a,b zu

$$p_2 = F_{FAHRER}(1+g)\Big/A_2 \qquad\qquad (1)$$

wobei g der Verstärkungsfaktor des Bremskraftverstärkers ist.

Wie bereits im ersten Betriebsmodus angeführt beträgt der Druck in der Ausgleichskammer 120 $p_1$ aufgrund der doppelt so großen Querschnittsfläche $A_1$ die Hälfte des Drucks $p_2$ in der zweiten Kolben-Zylinder-Anordnung 107, **108**a,b.

$$p_2 = 2p_1 \qquad\qquad (2)$$

Der Druck $p_3$ in der Eingangskammer ergibt sich zu

$$p_3 = F_{FAHRER}\Big/A_3 = F_{FAHRER}\Big/A_2 \,. \qquad\qquad (3)$$

wobei $F_{FAHRER}$ der Fahrerkraft 102 entspricht und $A_3$ die Querschnittsfläche der Eingangskammer ist. Das zweite Gleichheitszeichen gilt, unter der Annahme, dass die Querschnittsfläche $A_3$ der Eingangskammer gleich der Querschnittsfläche $A_2$ der zweiten Kolben-Zylinder-Anordnung ist. Kombiniert man Gleichungen 1, 2, und 3, so ergibt sich für den relevanten Zusammenhang zwischen dem Druck $p_3$ in der Eingangskammer und dem Druck $p_2$ in der zweiten Kolben-Zylinder-Anordnung:

$$p_3 = p_2\Big/(1+g) = p_1\,2\Big/(1+g)$$

Für einen selbsttätigen Volumentransport an Bremsflüssigkeit von der Ausgleichskammer **120** in die Eingangskammer **119** muss der Druck $p_1$ größer als der Druck p3 sein. Dies ist gegeben, wenn der Verstärkungsfaktor g >1 ist. Diese Bedingung hängt stark von der beteiligten Querschnittsflächen ab und lässt sich über diese einstellen.

Auch für diese Art der Wegkompensation über die Eingangsstange **118** kann die Menge an zwischen Ausgleichskammer 120 und Eingangskammer 119 ausgetauschtem Volumen über die jeweils beteiligten Querschnittsflächen sowie über die Ansteuerung oder Regelung des Ventils 112 vorgegeben bzw. eingestellt werden.

In einer **alternativen Ausführungsform** der Erfindung ist die Ausgleichskammer **120** anstatt mit der Eingangskammer **119** mit einem Hydraulikspeicher **401** verbunden.

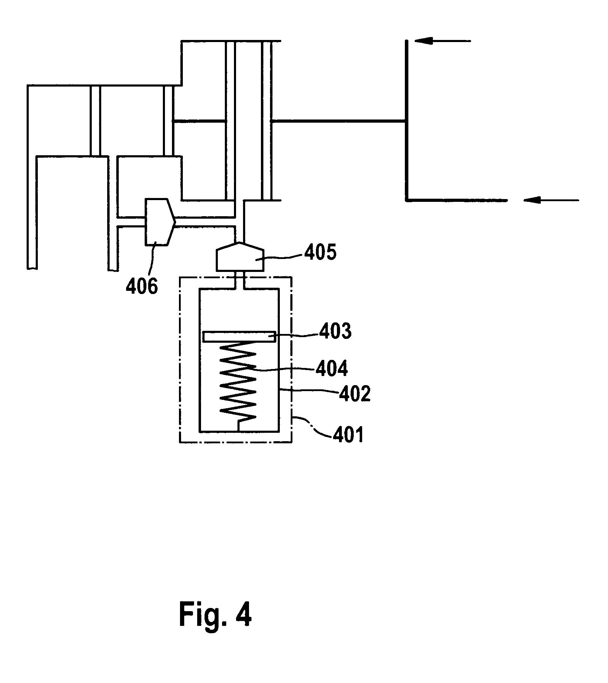

Soweit die verwendeten Elemente in Figur **4** identisch zu denen in Figur **1** sind, wurden sie nicht neu bezeichnet.

Der Hydraulikspeicher besteht aus einem Kolben **403**, einem Zylinder **402** und einem elastischen Element, insbesondere einer Feder **404**. Ebenso denkbar ist eine Hydraulikspeichereinrichtung in Form eines Membranspeichers und/oder eines Metallfaltenspeichers, sowie jede weitere Volumenaufnahmeeinheit mit Speicherfunktion.

Die hydraulische Verbindung zwischen dem Hydraulikspeicher **401** und der Ausgleichskammer **120** geschieht über eine Hydraulikleitung, die durch ein Ventil **405** unterbrochen werden kann, analog zu Leitung **109** und Ventil **112** in Figur **1**. Zusätzlich steht der Hydraulikspeicher **401** in hydraulischer Verbindung zu wenigstens einem angeschlossenen Bremskreis, wiederum über eine Hydraulikleitung die mit einem Ventil unterbrochen werden kann, analog zu Leitung **110** und Ventil **113** in Figur **1**.

Der Speicher kann durch Betätigen des Bremskraftverstärkers vorgeladen werden. Dazu wird die hydraulische Verbindung von dem Hauptbremszylinder zu den an den Bremskreis angeschlossenen Radbremsen durch ein Ventil (nicht eingezeichnet) unterbrochen. Dieses Ventil kann beispielsweise ein Einlassventil eines ESP- oder ABS Hydraulikaggregats sein. Ist die hydraulische Verbindung unterbrochen so kann der Bremskraftverstärker betätigt werden und über den Hauptbremszylinder Volumen an Bremsflüssigkeit in den Hydraulikspeicher **401** einbringen ohne dass eine Bremswirkung auftritt. In der Regel geschieht das Vorladen in Situationen in denen der Fahrer nicht bremst.

Der Hydraulikspeicher kann ebenso durch weitere Volumenförderungseinheiten, welche gegebenenfalls bereits in einem hydraulischen Bremssystem integriert sind vorgeladen werden, so zum Beispiel einer Hydraulikpumpe eines ESP-Aggregats.

Des Weiteren kann, sofern die im Speicher und im Bremssystem vorliegenden Druckverhältnisse es erlauben, der Hydraulikspeicher durch Ablassen von Volumen an Bremsflüssigkeit aus dem Bremskreis vorgeladen werden. Dieser Vorgang kann entweder zur Kompensation einer Pedalverschiebung, hervorgerufen durch eine Verringerung des Anteils zur Gesamtbremswirkung des Bremskraftverstärkers bei steigendem Generatormoment, geschehen, oder bei Beenden einer Bremsung, wenn sowieso Druck im Bremssystem abgebaut werden soll. Die Stellung der Ventile sowie die Positionierung der Ventile im hydraulischen Bremssystem ist in beiden alternativen Möglichkeiten wie der Speicher vorgeladen wird gegebenenfalls anzupassen und zu berücksichtigen.

Durch das Einbringen von Volumen in den Hydraulikspeicher wird das elastische Element **404** komprimiert und speichert so Energie. Das Volumen an Bremsflüssigkeit wird durch Schließen des Ventils **405** im Hydraulikspeicher **401** gespeichert. Nach dem Vorladen kann der Bremskraftverstärker zurückgestellt werden. Somit befindet sich das gespeicherte Volumen auf einem höheren Druckniveau als der Rest des hydraulischen Bremssystems.

In dieser Ausführungsform der erfindungsgemäßen Vorrichtung kann, wenn beispielsweise das Generatormoment sinkt und zur Erzeugung einer konstanten Bremswirkung die Unterstützungskraft **101** durch den Bremskraftverstärker erhöht wird Volumen an Bremsflüssigkeit aus dem Speicher **401** in die Ausgleichskammer **120** oder über Leitung 111b in den angeschlossenen Bremskreis bzw. in die zweite Kolben-Zylinder-Anordnung abgelassen werden. Dazu werden die Ventile **405** und **406** entsprechend gestellt. Durch das Vorladen befindet sich das Volumen an Bremsflüssigkeit in dem Hydraulikspeicher wie bereits erwähnt auf erhöhtem Druckniveau und kann somit durch einfaches Stellen der Ventile abgelassen werden, in vorteilhafter Weise ohne Verwendung einer Pumpe.

Außerdem kann, analog zu der Ausführungsform in Figur **1,** einer Pedalverschiebung, hervorgerufen durch eine Verringerung des Anteils zur Gesamtbremswirkung des Bremskraftverstärkers bei steigendem Generatormoment, entgegengewirkt werden, indem Volumen aus dem wenigstens einen angeschlossenen Bremskreis oder aus der zweiten Kolben-Zylinder-Anordnung in die Ausgleichskammer 120 abgelassen wird, in der auf Grund ihrer Querschnittsfläche ein geringerer Druck herrscht.

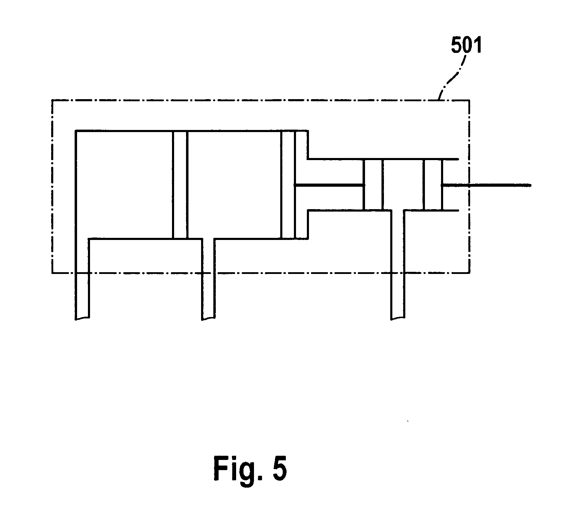

Eine alternative Ausführungsform 501 des erfindungsgemäßen Hauptbremszylinders ist in Figur 5 dargestellt. Die Bezugszeichen werden beibehalten.

Diese Ausführungsform des Hauptbremszylinders unterscheidet sich von der Ausführungsform 103 in Figur 1 dadurch, dass die Querschnittsfläche der ersten Kolben-Zylinder-Anordnung kleiner ist, als die Querschnittsfläche der zweiten Kolben-Zylinder-Anordnung .

Auch in dieser Ausführungsform kann das erfindungsgemäße Verfahren zur Anwendung kommen. Sowohl mit einer Volumenaufnahmeeinheit 104 mit einer Eingangskammer 119, als auch mit einem Hydraulikspeicher 401 kann der Hauptbremszylinder 501 zur Wegkompensation nach Anpassen der Bremswirkung durch den Bremskraftverstärker genutzt werden.

Im Vergleich zu den bereits beschriebenen Ausführungsformen des Verfahrens muss die Volumenaufnahme bzw. Volumenabgabe aus dem Hauptbremszylinder nach Erhöhen bzw. Verringern der Wirkung des Bremskraftverstärkers zum Ausgleichen einer sich ändernden Bremswirkung des weiteren Betriebssystems angepasst werden.

Ist der Hauptbremszylinder mit der Eingangskammer 119 verbunden so erfolgt nun eine Abgabe von Volumen aus der ersten Kolben-Zylinder-Anordnung **105, 106,a,b** in wenigstens eine der weiteren hydraulischen Verbindungen **111**a,b, also in den angeschlossenen Bremskreis oder in die zweite Kolben-Zylinder-Anordnung **107, 108,a,b,** wenn der Beitrag des weiteren Bremssystems erhöht wird und/oder eine Abgabe von Volumen aus der zweiten Kolben-Zylinder-Anordnung **107, 108a,b** oder aus dem angeschlossenen Bremskreis in die Eingangskammer **119** wenn der Beitrag des weiteren Bremssystems reduziert wird.

Für den letzteren Fall eines reduzierten Beitrags des weiteren Bremssystems zur Bremswirkung muss die Querschnittsfläche A3 der Eingangskammer kleiner sein als die Querschnittsfläche A2 der zweiten Kolben-Zylinder-Anordnung **107, 108,a,b.**

Ist der Hauptbremszylinder mit dem Hydraulikspeicher 401 verbunden so erfolgt nun eine Abgabe von Volumen aus der ersten Kolben-Zylinder-Anordnung **105, 106 a,b** in wenigstens eine der weiteren hydraulischen Verbindungen **111**a,b, wenn der Beitrag des weiteren Bremssystems erhöht wird und/oder eine Aufnahme von Volumen in die erste Kolben-Zylinder-Anordnung 105, 106 a,b aus dem Hydraulikspeicher, wenn der Beitrag des weiteren Bremssystems reduziert wird.

Ein für alle Ausführungsformen wichtiger Punkt ist die Möglichkeit das hydraulische Bremssystem auf konventionelle Art, ohne Volumenausgleich, zu betreiben. Dazu können die hydraulischen Verbindungen 109 und 110 unterbrochen werden, so dass kein Volumenausgleich zwischen Ausgleichskammer 120, sowie der Eingangskammer 119, der Hydraulikspeichereinrichtung 401 oder dem hydraulischen Bremssystem möglich ist. Im Gegensatz zu Bremsanlagen in denen das Bremspedal lediglich an einen Pedalsimulator gekoppelt ist und nicht mehr an ein hydraulisches Bremssystem, hat die vorliegende Erfindung somit den Vorteil, weiterhin eine Kopplung des Bremspedals an das hydraulische Bremssystem aufzuweisen und bietet so eine Rückfallebene für Ausfallsituationen, in denen beispielsweise eine Unterstützungskraft auf Grund eines Defekts nicht mehr zur Verfügung steht. Eine Bremsung kann so notfalls alleine durch die Fahrerkraft durchgeführt werden. Zusätzlich wird durch die bestehen bleibende Kopplung des Fahrpedals an das hydraulische Bremssystem ein gegebenenfalls synthetisches Pedalgefühl vermieden.

Zusammenfassend kann gesagt werden, dass die Erfindung ein Verfahren sowie eine Vorrichtung beschreibt, mittels derer Teil einer Gesamt- Bremsanlage - also einer Bremsanlage bestehend aus einem konventionellen Teil sowie einem weiteren z.B. rekuperativen Teil - Volumenverschiebungen an Bremsflüssigkeit möglich sind. Das erfindungsgemäße Verfahren und die erfindungsgemäße Vorrichtung kommen insbesondere dann zum Einsatz wenn die Druckverhältnisse im hydraulischen Teil der Bremsanlage durch den steuerbaren Bremskraftverstärker an eine Veränderung der zusätzlichen Bremswirkung des weiteren Teils der Bremsanlage angepasst werden. Somit wird eine Verblendung von Bremswirkungen der unterschiedlichen Bremssysteme zu einer konstanten Gesamtbremswirkung bewerkstelligt, selbst wenn sich der Anteil der einzelnen Bremssysteme an der Gesamtbremswirkung ändert. Eine solche Druckanpassung durch den Bremskraftverstärker geht meist einher mit einer Rückwirkung auf das Bremspedal, insbesondere mit einer Verschiebung desselben. Durch Volumenaustausch an Bremsflüssigkeit zwischen wenigstens einem hydraulischen Bremskreis, einer Ausgleichskammer und entweder einer Eingangskammer im Bremspedal oder einem Hydraulikspeicher kann die Druckanpassung stattfinden, ohne dass dies der Fahrer am Bremspedal auf Grund einer Positionsänderung des Pedals realisiert, und als störend empfindet. Das Verfahren kann beispielsweise bei Fahrzeugen Verwendung finden, bei denen eine Bremsverzögerung durch Betreiben einer elektrischen Maschine als Generator zur Stromerzeugung hervorgerufen wird und die zusätzlich ein konventionelles, hydraulisches Bremssystem als weiteres Bremssystem oder Backup-Bremssystem aufweisen.

## Patentansprüche

1. Hauptbremszylinder **(103)** zur Verwendung in einem hydraulischen Bremssystem, **dadurch gekennzeichnet, dass** der Hauptbremszylinder (103) eine erste Kolben-Zylinder-Anordnung **(105, 106**a,b**)** umfassend einen ersten Zylinder **(105)** und wenigstens zwei Kolben (**106**a,b) mit einer ersten Querschnittsfläche ($A_1$) sowie eine zweite Kolben-Zylinder-Anordnung (**107,108**a,b) umfassend einen zweiten Zylinder **(107)** und wenigstens zwei Kolben (**108**a,b) mit einer zweiten Querschnittsfläche ($A_2$) aufweist, wobei die erste Querschnittsfläche und die zweite Querschnittsfläche ($A_2$) unterschiedlich sind.

2. Hauptbremszylinder (103) nach Anspruch **1, dadurch gekennzeichnet, dass** der Hauptbremszylinder ausgehend von dem ersten Zylinder (105) eine erste hydraulische Verbindung **(109)** zu einer Volumenaufnahmeeinheit **(104, 401)** aufweist und dass der Hauptbremszylinder ausgehend von dem zweiten Zylinder **(107)** weitere hydraulische Verbindungen (**111**a,b) zu jeweils angeschlossenen Bremskreisen führen und wobei eine zweite hydraulische Verbindung **(110)** die erste hydraulische Verbindung (109) mit wenigstens einer der weiteren hydraulischen Verbindungen (**111**a,b) verbindet.

3. Hauptbremszylinder nach Anspruch 2, **dadurch gekennzeichnet, dass** die hydraulische Verbindung von der ersten Kolben-Zylinder-Anordnung **(105, 106**a,b**)** des Hauptbremszylinders **(103)** zu der Volumenaufnahmeeinheit **(104, 401)** sowie zu wenigstens einer der weiteren hydraulischen Verbindungen (**111**a,b) jeweils unterbrechbar ist, wobei erste steuerbare Unterbrechungsmittel **(112,405)** zum Unterbrechen der ersten hydraulischen Verbindung **(109)** sowie zweite steuerbare Unterbrechungsmittel **(113,406)** zum Unterbrechen der zweiten hydraulischen Verbindung **(110)** vorgesehen sind.

4. **Verfahren** zum Betreiben eines Hauptbremszylinders (103) nach wenigstens einem der Ansprüche 1-3 wobei das hydraulische Bremssystem ein Teil einer Gesamt-Bremsanlage ist, die neben dem hydraulischen Bremssystem ein weiteres Bremssystem umfasst, **dadurch gekennzeichnet, dass** der Hauptbremszylinder (103) in die oder aus der ersten Kolben-Zylinder-Anordnung **(105, 106**a,b**)** Volumen an Bremsflüssigkeit in Abhängigkeit vom Betriebszustand des weiteren Bremssystems aufnimmt oder abgibt, oder aus der zweiten Kolben-Zylinder-Anordnung **(107, 108a,b**) Volumen an Bremsflüssigkeit abgibt.

5. **Verfahren** nach Anspruch 4, wobei das hydraulische Bremssystem einen die vom Fahrer eingebrachte Betätigungskraft **(102)** um eine Unterstützungskraft **(101)** verstärkenden steuerbaren Bremskraftverstärker aufweist, wobei die Gesamt-Bremsanlage ein Betätigungselement **(114)** aufweist, wobei das Betätigungselement **(114)** eine Eingansstange **(118)** zur Aufnahme der Fahrerkraft **(102)** umfasst **dadurch gekennzeichnet, dass** der Bremskraftverstärker derart betrieben wird, dass

- bei einer durch das weitere Bremssystem bedingten Bremsmomentzunahme der Bremskraftverstärker in seiner Wirkung derart reduziert wird, und/oder
- bei einer durch das weitere Bremssystem bedingten Bremsmomentabnahme der Bremskraftverstärker in seiner Wirkung derart erhöht wird,

dass das durch die Gesamt-Bremsanlage aufgebrachte Gesamtbremsmoment im Wesentlichen konstant ist und dass der Hauptbremszylinder **(103)** derart betrieben wird, dass durch Volumenaufnahme und/oder Volumenabgabe durch den Hauptbremszylinder **(103)** aus der und/oder in die wenigstens eine der weiteren hydraulischen Verbindungen **(111**a,b**)** oder aus der und/oder in die Volumenaufnahmeeinheit **(104,401)** einer, durch Änderung der durch den Bremskraftverstärker aufgebrachten Unterstützungskraft **(101)** hervorgerufenen Änderung der Position des Betätigungselements **(114)** und/oder der Eingangsstange **(118)** entgegenwirkt wird, insbesondere dass diese Änderung ganz oder zumindest teilweise kompensiert wird.

6. Verfahren nach Anspruch 5, **dadurch gekennzeichnet, dass,** durch Herstellen wenigstens einer der hydraulischen Verbindungen **(109, 110)** zu der Volumenaufnahmeeinheit (104) oder zu wenigstens einer der weiteren hydraulischen Verbindungen **(111**a,b**)** Volumen an Bremsflüssigkeit abhängig vom Betriebszustand des weiteren Bremssystems aus der ersten Kolben-Zylinder-Anordnung **(105, 106a,b)** in die Volumenaufnahmeeinheit (104), insbesondere selbsttätig, eingebracht wird oder aus wenigstens einer der weiteren hydraulischen Verbindungen **(111**a,b**)** in die erste Kolben-Zylinder-Anordnung **(105, 106a,b)** oder in die Volumenaufnahmeeinheit (104), insbesondere selbsttätig, aufgenommen wird.

7. Verfahren nach Anspruch **6, dadurch gekennzeichnet, dass** die erste Querschnittsfläche größer als die zweite Querschnittsfläche ist (103) und dass der Betriebszustand des weiteren Bremssystems durch eine Änderung des Beitrags zur Gesamtbremswirkung durch das weitere Bremssystem repräsentiert wird, wobei insbesondere vorgesehen ist, dass

- eine Aufnahme von Volumen in die erste Kolben-Zylinder-Anordnung **(105, 106a,b)** aus wenigstens einer der weiteren hydraulischen Verbindungen **(111**a,b**)** dann geschieht, wenn der Beitrag des weiteren Bremssystems erhöht wird, und/oder
- eine Abgabe von Volumen aus der ersten Kolben-Zylinder-Anordnung **(105, 106a,b)** in die Volumenaufnahmeeinheit **(104)** dann geschieht, wenn der Beitrag des weiteren Bremssystems reduziert wird.

8. Verfahren nach Anspruch 6, **dadurch gekennzeichnet, dass** die erste Querschnittsfläche **kleiner** als die zweite Querschnittsfläche ist (501) und dass der Betriebszustand des weiteren Bremssystems durch eine Änderung des Beitrags zur Gesamtbremswirkung durch das weitere Bremssystem repräsentiert wird, wobei insbesondere vorgesehen ist, dass

- eine Abgabe von Volumen aus der ersten Kolben-Zylinder-Anordnung **(105, 106a,b)** in wenigstens eine der weiteren hydraulischen Verbindungen **(111**a,b**)** dann geschieht, wenn der Beitrag des weiteren Bremssystems erhöht wird und/oder
- eine Abgabe von Volumen aus der zweiten Kolben-Zylinder-Anordnung **(107, 108a,b)** in die Volumenaufnahmeeinheit **(104)** dann geschieht, wenn der Beitrag des weiteren Bremssystems reduziert wird.

9. Verfahren nach Anspruch 5, **dadurch gekennzeichnet, dass** durch Herstellen einer der hydraulischen Verbindungen zu der Volumenaufnahmeeinheit (401) oder zu wenigstens einer der weiteren hydraulischen Verbindungen **(111**a,b**)** Volumen an Bremsflüssigkeit abhängig vom Betriebszustand des weiteren Bremssystems entweder aus der Volumenaufnahmeeinheit **(401)** oder aus wenigstens einer der weiteren hydraulischen Verbindungen (111a,b) in die erste Kolben-Zylinder-Anordnung **(105, 106**a,b**)**, insbesondere selbsttätig, eingebracht wird.

10. Verfahren nach Anspruch 9, **dadurch gekennzeichnet, dass** die erste Querschnittsfläche **größer** als die zweite Querschnittsfläche ist (103) und dass der Betriebszustand des weiteren Bremssystems durch eine Änderung des Beitrags zur Gesamtbremswirkung durch das weitere Bremssystem repräsentiert wird, wobei insbesondere vorgesehen ist, dass

- eine Aufnahme von Volumen in die erste Kolben-Zylinder-Anordnung **(105, 106**a,b**)** aus der Volumenaufnahmeeinheit (401) dann geschieht, wenn der Beitrag des weiteren Bremssystems verringert wird und/oder
- eine Aufnahme von Volumen in die erste Kolben-Zylinder-Anordnung **(105, 106**a,b) aus wenigstens einer der weiteren hydraulischen Verbindungen **(111**a,b) dann geschieht, wenn der Beitrag des weiteren Bremssystems erhöht wird.

11. Verfahren nach Anspruch 9, **dadurch gekennzeichnet, dass** die erste Querschnittsfläche **kleiner** als die zweite Querschnittsfläche ist (501) und dass der Betriebszustand des weiteren Bremssystems durch eine Änderung des Beitrags zur Gesamtbremswirkung durch das weitere Bremssystem repräsentiert wird, wobei insbesondere vorgesehen ist, dass

- eine Abgabe von Volumen aus der ersten Kolben-Zylinder-Anordnung **(105**, **106a**,b) in wenigstens eine der weiteren hydraulischen Verbindungen **(111**a,b) dann geschieht, wenn der Beitrag des weiteren Bremssystems erhöht wird und/oder
- eine Aufnahme von Volumen in die erste Kolben-Zylinder-Anordnung **(105**, **106a**,b) aus der Volumenaufnahmeeinheit **(401)** dann geschieht, wenn der Beitrag des weiteren Bremssystems reduziert wird.

12. Verfahren nach Anspruch 7 oder 9, **dadurch gekennzeichnet, dass** die Aufnahme und/oder Abgabe von Volumen an Bremsflüssigkeit durch die erste Kolben-Zylinder-Anordnung **(105, 106**a,b**)** durch Steuern der ersten und/oder zweiten Unterbrechungsmittel **(112, 405, 113, 406)** gesteuert wird, insbesondere, dass eine Aufnahme und/oder Abgabe an Bremsflüssigkeit aus dem und/oder in die erste Kolben-Zylinder-Anordnung **(105, 106**a,b**)** über die zweite hydraulische Verbindung **(110)** und/oder über die erste hydraulische Verbindung **(109)** durch Steuern der jeweiligen Unterbrechungsmittel **(112, 405, 113, 406)** geschieht.

13. Verfahren nach Anspruch **4, dadurch gekennzeichnet, dass** die mit dem Hauptbremszylinder hydraulisch verbundene Volumenaufnahmeeinheit **(104, 401)** eine Kolben-Zylinder-Einheit **(104)** ist, die in das Betätigungselement **(114)** integriert ist oder eine Hydraulikspeichereinheit **(401),** welche wenigstens einen Kolben **(403),** wenigstens einen Zylinder **(402)** sowie wenigstens ein elastisches Element **(404),** insbesondere eine Feder umfasst.

14. Verfahren nach Anspruch 13, **dadurch gekennzeichnet, dass** die Hydraulikspeichereinheit **(401)** durch gesteuertes Betätigen des Bremskraftverstärkers vorgeladen werden kann und so das Druckniveau im Hydraulikspeicher **(401)** angehoben wird, damit Volumen an Bremsflüssigkeit aus dem Hydraulikspeicher **(401)** an die erste Kolben-Zylinder-Anordnung (105,106a,b) des Hauptbremszylinders **(103)** oder in wenigstens eine der weiteren hydraulischen Verbindungen **(111**a,b) bei hergestellter erster hydraulischer Verbindung (109) und/oder hergestellter zweiter hydraulischer Verbindung (110) selbsttätig abgeben wird.

15. Verfahren nach Anspruch **14, dadurch gekennzeichnet, dass**

- die ersten und zweiten Querschnittsflächen der ersten und zweiten Kolben-Zylinder-Anordnung **(105;106** a, b; **107; 108** a,b), sowie die Querschnittsflächen der Kolben-Zylinder-Einheit **(104)** in dem Betätigungselement **(114)** und/oder
- die Vorspannung und Auslegung des wenigstens einen elastischen Elements **(404)** und/oder
- der Ladezustand der Hydraulikspeichereinrichtung **(401)** in Bezug auf den in wenigstens einer der weiteren hydraulischen Verbindungen (111a,b) oder in der ersten Kolben-Zylinder-Anordnung (**105;106** a,b)vorhandenen Druck,

so dimensioniert sind, dass ein Aufnehmen und/oder Abgeben, insbesondere selbsttätiges Aufnehmen und/oder Abgeben von Volumen an Bremsflüssigkeit in den und/oder aus der ersten Kolben-Zylinder-Anordnung **(105,106,ab),** oder insbesondere eine Abgabe von Volumen aus der zweiten Kolben-Zylinder-Anordnung **(107, 108a,b),** innerhalb konstruktionsbedingter Grenzen möglich ist.

16. Verfahren nach Anspruch 12, **dadurch gekennzeichnet**, der Betrag der Änderung der Position des Betätigungselements (114) und/oder der Eingangsstange (118) durch Betreiben des Hauptbremszylinders von den Querschnittsflächen der ersten Kolben-Zylinder-Einheit (**105;106** a,b), der zweiten Kolben-Zylinder-Einheit **(107; 108** a,b)sowie der Volumenaufnahmeeinheit **(104,401)** abhängt sowie durch Steuern der jeweiligen Unterbrechungsmittel **(112, 405, 113, 406)** innerhalb konstruktionsbedingter Grenzen gesteuert wird.

**Claims**

1.  Master brake cylinder **(103)** for use in a hydraulic brake system, **characterized in that** the master brake cylinder **(103)** has a first piston-cylinder arrangement **(105, 106**a,b**)**, comprising a first cylinder **(105)** and at least two pistons **(106**a,b**)** with a first cross-sectional area ($A_1$) and a second piston-cylinder arrangement **(107, 108**a,b**)** comprising the second cylinder **(107)** and at least two pistons **(108**a,b**)** with a second cross-sectional area ($A_2$), wherein the first cross-sectional area and the second cross-sectional area ($A_2$) are different.

2.  Master brake cylinder **(103)** according to Claim 1, **characterized in that** the master brake cylinder has, starting from the first cylinder **(105),** a first hydraulic connection **(109)** for a volume-absorbing unit **(104, 401),** and **in that** the master brake cylinder starting from the second cylinder **(107),** further hydraulic connections **(111**a,b**)** lead to respectively connected brake circuits, and wherein a second hydraulic connection (110) connects the first hydraulic connection **(109)** to at least one of the further hydraulic connections **(111**a,b**)**.

3.  Master brake cylinder according to Claim 2, **characterized in that** the hydraulic connection from the first piston-cylinder arrangement **(105, 106**a,b**)** of the master brake cylinder **(103)** to the volume-absorbing unit **(104, 401)** and to at least one of the further hydraulic connections **(111**a,b**)** can be respectively disconnected, wherein first controllable disconnection means **(112, 405)** are provided for disconnecting the first hydraulic connection **(109),** and second controllable disconnection means **(113, 406)** are provided for disconnecting the second hydraulic connection **(110).**

4.  **Method** for operating a master brake cylinder (103) according to at least one of Claims 1 - 3, wherein the hydraulic brake system is part of a composite brake system which comprises a further brake system in addition to the hydraulic brake system,
    **characterized in that** the master brake cylinder (103) absorbs volumes of brake fluid into the first piston-cylinder arrangement **(105, 106**a,b**),** or discharges volumes of brake fluid therefrom, as a function of the operating state of the further brake system, or discharges volumes of brake fluid from the second piston-cylinder arrangement **(107, 108a,b**).

5.  **Method** according to Claim 4, wherein the hydraulic brake system has a controllable brake booster by which the activation force **(102)** applied by the driver is boosted with an assistance force **(101),** wherein the composite brake system has an activation element **(114),** wherein the activation element **(114)** comprises an input rod **(118)** for absorbing the driver's force **(102), characterized in that** the brake booster is operated in such a way that

    - in the case of an increase in braking torque brought about by the further brake system the brake booster is reduced in its effect and/or
    - in the case of a decrease in braking torque brought about by the further brake system the brake booster is increased in its effect, in such a way that the composite braking torque which is applied by the composite brake system is essentially constant **and in that** the master brake cylinder **(103)** is operated in such a way that by absorption of volume and/or by discharging of volume by the master brake cylinder **(103)** from the and/or into the at least one of the further hydraulic connections **(111**a,b**)** or from the and/or into the volume-absorbing unit **(104, 401),** a change in the position of the activation element **(114)** and/or of the input rod **(118)** which is brought about by changing the assistance force **(101)** applied by the brake booster is counteracted, in particular in such a way that this change is entirely or at least partially compensated.

6.  Method according to Claim 5, **characterized in that,** by producing at least one of the hydraulic connections **(109, 110)** to the volume-absorbing unit (104) or to at least one of the further hydraulic connections **(111**a,b**)**, a volume of brake fluid is input, in particular automatically, from the first piston-cylinder arrangement **(105, 106**a,b**)** into the volume-absorbing unit **(104)** or is absorbed, in particular automatically, from at least one of the further hydraulic connections **(111**a,b**)** into the first piston-cylinder arrangement **(105, 106**a,b**)** or into the volume-absorbing unit (104), as a function of the operating state of the further brake system.

7.  Method according to Claim **6, characterized in that** the first cross-sectional area is **larger** than the second cross-sectional area (103), and **in that** the operating state of the further brake system is represented by a change in the contribution to the composite braking effect by the further brake system, wherein, in particular, there is provision that

    - a volume is absorbed into the first piston-cylinder arrangement **(105, 106**a,b**)** from at least one of the further hydraulic connections **(111**a,b**)** when the contribution of the further brake system is increased, and/or
    - a volume is discharged from the first piston-cylinder arrangement **(105, 106**a,b**)** into the volume absorbing unit **(104)** when the contribution of the further brake system is reduced.

8.  Method according to Claim **6, characterized in that** the first cross-sectional area is **smaller** than the second cross-sectional area (501), and **in that** the operating state of the further brake system is represented by a change in the contribution to the composite braking effect by the further brake system, wherein, in particular, there is provision that

    - a volume is discharged from the first piston-cylinder arrangement **(105, 106**a,b) into at least one of the further hydraulic connections (**111**a,b) when the contribution of the further brake system is increased and/or
    - a volume is discharged from the second piston-cylinder arrangement **(107, 108a,b**) into the volume-absorbing unit **(104)** when the contribution of the further brake system is reduced.

9.  Method according to Claim 5, **characterized in that,** by producing one of the hydraulic connections to the volume-absorbing unit (401) or to at least one of the further hydraulic connections (**111**a,b), a volume of brake fluid is input, in particular automatically, into the first piston-cylinder arrangement **(105, 106**a,b), either from the volume-absorbing unit **(401)** or from at least one of the further hydraulic connections (**111**a,b), as a function of the operating state of the further brake system.

10. Method according to Claim 9, **characterized in that** the first cross-sectional area is **larger** than the second cross-sectional area (103), and **in that** the operating state of the further brake system is represented by a change in the contribution to the composite braking effect by the further brake system, wherein, in particular, there is provision that

    - a volume is absorbed into the first piston-cylinder arrangement **(105, 106**a,b) from the volume-absorbing unit (401) when the contribution of the further brake system is reduced and/or
    - a volume is absorbed into the first piston-cylinder arrangement **(105, 106**a,b) from at least one of the further hydraulic connections (**111**a,b) when the contribution of the further brake system is increased.

11. Method according to Claim 9, **characterized in that** the first cross-sectional area is **smaller** than the second cross-sectional area (501), and **in that** the operating state of the further brake system is represented by a change in the contribution to the composite braking effect by the further brake system, wherein, in particular, there is provision that

    - a volume is discharged from the first piston-cylinder arrangement **(105, 106**a,b) into at least one of the further hydraulic connections (**111**a,b) when the contribution of the further brake system is increased, and/or
    - a volume is absorbed into the first piston-cylinder arrangement **(105, 106**a,b) from the volume-absorbing unit (401) when the contribution of the further brake system is reduced.

12. Method according to Claim 7 or 9, **characterized in that** the absorption and/or discharging of volumes of brake fluid by the first piston-cylinder arrangement **(105, 106**a,b) is controlled by controlling the first and/or second disconnection means **(112, 405, 113, 406),** in particular by absorption and/or discharging of brake fluid from and/or into the first piston-cylinder arrangement **(105, 106**a,b) via the second hydraulic connection **(110)** and/or via the first hydraulic connection **(109)** by controlling the respective disconnection means **(112, 405, 113, 406).**

13. Method according to Claim 4, **characterized in that** the volume-absorbing unit (**104, 401**) which is hydraulically connected to the master brake cylinder is a piston-cylinder unit **(104)** which is integrated into the activation element **(114)** or a hydraulic accumulator unit **(401)** which comprises at least one piston **(403),** at least one cylinder **(402)** and at least one elastic element **(404),** in particular a spring.

14. Method according to Claim 13, **characterized in that** the hydraulic accumulator unit **(401)** can be precharged by controlled activation of the brake booster and the pressure level in the hydraulic accumulator **(401)** is therefore raised so that the volume of brake fluid in the hydraulic accumulator **(401)** is discharged automatically to the first piston-cylinder arrangement (105, 106a,b) of the master brake cylinder **(103)** or into at least one of the further hydraulic connections (**111**a,b) when the first hydraulic connection (109) is produced and/or the second hydraulic connection (110) is produced.

15. Method according to Claim **14, characterized in that**

    - the first and second cross-sectional areas of the first and second piston-cylinder arrangement **(105; 106**a,b; **107; 108a,b)** as well as the cross-sectional areas of the piston-cylinder unit **(104)** in the activation element **(114)** and/or

- the prestress and configuration of the at least one elastic element **(404)** and/or
- the hydraulic accumulator device **(401)** with respect to the pressure present in at least one of the further hydraulic connections (**111**a,b) or in the first piston-cylinder arrangement **(105; 106**a,b**)** is dimensioned in such a way that a volume of brake fluid can be absorbed and/or discharged, in particular automatically absorbed and/or discharged, to and/or from the first piston-cylinder arrangement **(105, 106a,b**) or, in particular, a volume can be discharged from the second piston-cylinder arrangement **(107, 108a,b**), within structurally conditioned limits.

16. Method according to Claim 12, **characterized in that** the absolute value of the change in the position of the activation element (114) and/or of the input rod (118) by operating the master brake cylinder depends on the cross-sectional areas of the first piston-cylinder unit **(105; 106**a,b), of the second piston-cylinder unit **(107; 108**a,b) and on the volume absorbing unit **(104, 401),** and is controlled by controlling the respective disconnection means **(112, 405, 113, 406)** within structurally conditioned limits.

**Revendications**

1. Maître-cylindre de frein (103) pouvant être utilisé dans un système hydraulique de frein, **caractérisé en ce que** le maître-cylindre de frein (103) comporte un premier agencement piston-cylindre (105, 106a, b) comprenant un premier cylindre (105) et au moins deux pistons (106a, b) avec une première surface de section transversale ($A_1$) ainsi qu'un deuxième agencement piston-cylindre (107, 108a, b) comprenant un deuxième cylindre (107) et au moins deux pistons (108a, b) avec une deuxième surface de section transversale ($A_2$), la première surface de section transversale et la deuxième surface de section transversale ($A_2$) étant différentes.

2. Maître-cylindre de frein (103) selon la revendication 1, **caractérisé en ce que** le maître-cylindre de frein comporte, à partir du premier cylindre (105), une première liaison hydraulique (109) conduisant à une unité de réception de volume (104, 401) et que le maître-cylindre de frein comporte, à partir du deuxième cylindre (107), des liaisons hydrauliques supplémentaires (111a, b) conduisant à des circuits de frein respectivement raccordés et une deuxième liaison hydraulique (110) reliant la première liaison hydraulique (109) à au moins une des liaisons hydrauliques supplémentaires (111a, b).

3. Maître-cylindre de frein selon la revendication 2, **caractérisé en ce que** la liaison hydraulique du premier agencement piston-cylindre (105, 106a, b) du maître-cylindre de frein (103) conduisant à l'unité de réception de volume (104, 401) ainsi qu'à au moins une des liaisons hydrauliques supplémentaires (111a, b) peut respectivement être interrompue, le premier moyen d'interruption commandable (112, 405) servant à interrompre la première liaison hydraulique (109) et le deuxième moyen d'interruption (113, 406) servant à interrompre la deuxième liaison hydraulique (110).

4. Procédé d'entraînement d'un maître-cylindre de frein (103) selon au moins l'une quelconque des revendications 1 à 3, le système hydraulique de frein faisant partie d'une installation de freinage globale comprenant, outre le système hydraulique de frein, un système de freinage supplémentaire, **caractérisé en ce que** le maître-cylindre de frein (103) dans lequel ou hors duquel le premier agencement piston-cylindre (105, 106a, b) reçoit ou envoie un volume de liquide de frein dépend de l'état de fonctionnement du système de freinage supplémentaire, ou envoie à partir du deuxième agencement piston-cylindre (107, 108a, b) un certain volume de liquide de frein.

5. Procédé selon la revendication 4, le système hydraulique de frein comportant un amplificateur de force de freinage commandable renforçant la force d'actionnement (102) appliquée par le conducteur en y ajoutant une force de soutien (101), l'installation de freinage globale comportant un élément d'actionnement (114), l'élément d'actionnement (114) comprenant une barre d'admission (118) permettant d'absorber la force du conducteur (102), **caractérisé en ce que** l'amplificateur de force · de freinage est entraîné de telle sorte que :

- en cas d'augmentation du couple de freinage conditionnée par le système de freinage supplémentaire, l'amplificateur de force de freinage voit son effet réduit de telle sorte que ; et/ou
- en cas de baisse du couple de freinage conditionnée par le système de freinage supplémentaire, l'amplificateur de force de freinage voit son effet accru de telle sorte que ;

le couple de freinage total appliqué par l'installation de freinage globale est pour l'essentiel constant et que le maître-cylindre de frein (103) est entraîné de telle sorte que la réception de volume et/ou la libération de volume est contrée par le maître-cylindre de frein (103) hors de et/ou dans l'au moins une liaison parmi les liaisons hydrauliques supplémentaires (111a, b) ou hors de et/ou dans l'unité de réception de volume (104, 401) déclenchée par la force de freinage (101) appliquée par l'amplificateur par modification de la variation de la position de l'élément d'actionnement (114) et/ou de la barre d'admission (118), cette variation étant notamment compensée entièrement ou au moins en partie.

6. Procédé selon la revendication 5, **caractérisé en ce que** la mise en place d'au moins une des liaisons hydrauliques (109, 110) conduisant à l'unité de réception de volume (104) ou à au moins une des liaisons hydrauliques supplémentaires (111a, b) permet d'appliquer un volume de liquide de frein en fonction de l'état de fonctionnement du système de freinage supplémentaire, en partant du premier agencement piston-cylindre (105, 106a, b) jusque dans l'unité de réception de volume (104), notamment automatiquement, ou en envoyant le volume de liquide de frein en partant d'au moins une des liaisons hydrauliques supplémentaires (111a, b) jusque dans le premier agencement piston-cylindre (105, 106a, b) ou dans l'unité de réception de volume (104), notamment automatiquement.

7. Procédé selon la revendication 6, **caractérisé en ce que** la première surface de section transversale est plus grande que la deuxième surface de section transversale (103) et que l'état de fonctionnement du système de freinage supplémentaire est représenté par une variation dans la contribution à l'effet global de freinage déclenché par le système de freinage supplémentaire, en prévoyant :

- une réception de volume dans le premier agencement piston-cylindre (105, 106a, b) se produit à partir d'au moins une des liaisons hydrauliques supplémentaires (111a, b) lorsque la contribution du système de freinage supplémentaire est accrue ; et/ou
- un renvoi de volume du premier agencement piston-cylindre (105, 106a, b) dans l'unité de réception de volume (104) lorsque la contribution du système de freinage supplémentaire est réduite.

8. Procédé selon la revendication 6, **caractérisé en ce que** la première surface de section transversale est plus petite que la deuxième surface de section transversale (501) et que l'état de fonctionnement du système de freinage supplémentaire est représenté par une variation dans la contribution à l'effet global de freinage déclenché par le système de freinage supplémentaire, en prévoyant :

- un renvoi de volume du premier agencement piston-cylindre (105, 106a, b) dans au moins une des liaisons hydrauliques supplémentaires (111a, b) lorsque la contribution du système de freinage supplémentaire est accrue ; et/ou
- un renvoi de volume du deuxième agencement piston-cylindre (107, 108a, b) dans l'unité de réception de volume (104) lorsque la contribution du système de freinage supplémentaire est réduite.

9. Procédé selon la revendication 5, **caractérisé en ce que** la mise en place d'une des liaisons hydrauliques conduisant à l'unité de réception de volume (401) ou à au moins une des liaisons hydrauliques supplémentaires (111a, b) permet d'amener dans le premier agencement piston-cylindre (105, 106a, b), notamment automatiquement, un volume de liquide de frein, en fonction de l'état de fonctionnement du système de freinage supplémentaire, soit à partir de l'unité de réception de volume (401) soit à partir d'au moins une des liaisons hydrauliques supplémentaires (111a, b).

10. Procédé selon la revendication 9, **caractérisé en ce que** la première surface de section transversale est plus grande que la deuxième surface de section transversale (103) et que l'état de fonctionnement du système de freinage supplémentaire est représenté par une variation dans la contribution à l'effet global de freinage déclenché par le système de freinage supplémentaire, en prévoyant :

- une réception de volume dans le premier agencement piston-cylindre (105, 106a, b) à partir de l'unité de réception de volume (401) lorsque la contribution du système de freinage supplémentaire est réduite ; et/ou
- une réception de volume dans le premier agencement piston-cylindre (105, 106a, b) à partir d'au moins une des liaisons hydrauliques supplémentaires (111a, b) lorsque la contribution du système de freinage supplémentaire est accrue.

11. Procédé selon la revendication 9, **caractérisé en ce que** la première surface de section transversale est plus petite que la deuxième surface de section transversale (501) et que l'état de fonctionnement du système de freinage supplémentaire est représenté par une variation dans la contribution à l'effet global de freinage déclenché par le système de freinage supplémentaire, en prévoyant :

- un renvoi de volume du premier agencement piston-cylindre (105, 106a, b) dans au moins une des liaisons hydrauliques supplémentaires (111a, b) lorsque la contribution du système de freinage supplémentaire est accrue ; et/ou
- une réception de volume dans le premier agencement piston-cylindre (105, 106a, b) provenant de l'unité de réception de volume (401) lorsque la contribution du système de freinage supplémentaire est réduite.

12. Procédé selon la revendication 7 ou 9, **caractérisé en ce que** la réception et/ou le renvoi de volume de liquide de frein par le premier agencement piston-cylindre (105, 106a, b) est commandé par le biais du premier et/ou du deuxième moyen d'interruption (112, 405, 113, 406), notamment que la réception et/ou le renvoi de liquide de frein hors de et/ou dans le premier agencement piston-cylindre (105, 106a, b) se produit par le biais de la deuxième liaison hydraulique (110) et/ou par le biais de la première liaison hydraulique (109) en commandant le moyen d'interruption (112, 405, 113, 406) respectif.

13. Procédé selon la revendication 4, **caractérisé en ce que** l'unité de réception de volume (104, 401) reliée sur le plan hydraulique au maître-cylindre de frein est une unité piston-cylindre (104) intégrée dans l'élément d'actionnement (114) ou une unité d'accumulateur hydraulique (401) comprenant au moins un piston (403), au moins un cylindre (402) ainsi qu'au moins un élément élastique (404), notamment un ressort.

14. Procédé selon la revendication 13, **caractérisé en ce que** l'unité d'accumulateur hydraulique (401) peut être préchargée par actionnement commandé de l'amplificateur de force de freinage, augmentant ainsi le niveau de pression dans l'accumulateur hydraulique (401), de façon à renvoyer automatiquement un volume de de liquide de frein hors de l'accumulateur hydraulique (401) au niveau du premier agencement piston-cylindre (105, 106a, b) du maître-cylindre de frein (103) ou dans au moins une des liaisons hydrauliques supplémentaires (111a, b) lorsque la première liaison hydraulique (109) et/ou la deuxième liaison hydraulique (110) sont mises en place.

15. Procédé selon la revendication 14, **caractérisé en ce que** :

- les première et deuxième surfaces de section transversale du premier et du deuxième agencement piston-cylindre (105 ; 106 a, b ; 107 ; 108 a, b) ainsi que les surfaces de section transversale de l'unité piston-cylindre (104) sont dimensionnées de telle sorte dans l'élément d'actionnement (114) et/ou
- que la précontrainte et la conception de l'au moins un élément élastique (404) ; et/ou
- que l'état de charge du dispositif d'accumulateur hydraulique (401) est dimensionné de telle sorte par rapport à la pression présente dans au moins une des liaisons hydrauliques supplémentaires (111a, b) ou dans le premier agencement piston-cylindre (105 ; 106 a, b) ;

qu'une réception et/ou un renvoi, notamment une réception et/ou un renvoi automatique d'un volume de liquide de frein dans le et/ou hors du premier agencement piston-cylindre (105, 106a, b) est possible dans les limites de construction, notamment un renvoi de volume du deuxième agencement piston-cylindre (107, 108a, b).

16. Procédé selon la revendication 12, **caractérisé en ce que** la quantité de variation de la position de l'élément d'actionnement (114) et/ou de la barre d'admission (118) dépend de l'actionnement du maître-cylindre de frein par les surfaces de section transversale de la première unité piston-cylindre (105 ; 106 a, b), de la deuxième unité piston-cylindre (107 ; 108 a, b) ainsi que de l'unité de réception de volume (104, 401) et est commandée par le biais du moyen d'interruption (112, 405, 113, 406) respectif, dans les limites de construction.

Fig. 1

Fig. 2a

Fig. 2b

Fig. 2c

Fig. 2d

Fig. 3a

Fig. 3b

Fig. 3c

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10164319 A1
- WO 2004101308 A